# EUROPÄISCHE PATENTSCHRIFT

(11) **EP 2 176 064 B1**
(45) Veröffentlichungstag und Bekanntmachung des Hinweises auf die Patenterteilung: **27.07.2011**
(21) Anmeldenummer: 08802947.5
(22) Anmeldetag: 31.07.2008
(51) Int. Cl.: B32B 9/00, H01M 8/02, H01M 8/18

(54) **SCHICHTSTOFF**
LAYERED MATERIAL
MATÉRIAU STRATIFIÉ

(30) Priorität: 08.08.2007 DE 102007037435
(43) Veröffentlichungstag der Anmeldung: 21.04.2010
(73) Patentinhaber: SGL Carbon SE, 65203 Wiesbaden (DE)
(72) Erfinder: CHRIST, Martin, 86159 Augsburg (DE); ÖTTINGER, Oswin, 86405 Meitingen (DE); LANGER, Werner, 86450 Altenmünster (DE); MECHEN, Sylvia, 86405 Meitingen (DE); BACHER, Jürgen, 86637 Wertingen (DE); HUDLER, Bastian, 86641 Rain (DE)
(86) Internationale Anmeldenummer: PCT/EP2008/060072
(87) Internationale Veröffentlichungsnummer: WO 2009/019195

(56) Entgegenhaltungen:
- EP-A- 0 616 884
- DE-B3-102004 041 043
- GB-A- 1 577 771

## Beschreibung

Die Erfindung betrifft einen Schichtstoff, der aus mindestens einer Lage eines kompressiblen, graphitischen Materials und mindestens einer weiteren Lage elnes graphitgefüllten Polymer-Materials besteht und bei dem eine unlösbare Ver-bindung zwischen den Materialien vorliegt sowie ein Verfahren zur Herstellung eines solchen Schichtstoffes.

Schichtstoffe aus Metallplatten oder -Blechen und aus Platten oder Folien hergestellt durch Verdichten von wurmförmigem oder expandiertem Graphit sind bekannt (US 3,404,061; DE-OS 25 98 351; US 4,422,894; Firmenprospekt TM SIGRAFLEX der SGL Technologies GmbH). Sie werden vor allem für Flach-dichtungen, als Ofeneinbauten, Strahlungsschilde, Abscheidungsplatten in Elektrofiltem und für korrosionsbeständige Auskleidungen verwendet.

Anordnung und Abfolge der einzelnen Lagen in derartigen Schichtstoffen sind weitgehend frei wählbar und richten sich nach dem vorgesehenen Anwendungszweck. In den meisten Fällen ist der Graphit ein- oder beidseitig auf die Metalllage aufgebracht.

Nach der Art der Haftung zwischen Graphit- und Metalllage können zwei Arten derartiger Schichtstoffe unterschieden werden. Im ersten Fall ist die Haftung mechanischer Art. Der metallische Teil hat Oberflächenstrukturen, die beim Verpressen des Graphits mit dem Metallteil entweder in den Graphit eindringen oder in die der Graphit durch Fließprozesse eindringt.

Beispiele hlerfür sind Spießbleche, Bleche mit nicht entgrateten Bohrungen. Drahtgewebe, Sintermetalle bzw. Metalloberflächen mit porigen, rauhen oder verletzten Oberflächen.

Im zwelten Fall werden die Metall- und die Graphitoberflächen mittels organischer oder anorganischer Kleber kraftschlüssig miteinander verbunden. Dieses Verfahren wird bevorzugt bei Vorliegen sehr glatter Metalloberflächen und/oder dann verwendet, wenn die Oberflächen nicht mit mechanisch wirkenden Verankerungselementen versehen werden können.

Alle Verbindungen des ersten und des zweiten Typs haben Nachteile, die die Verwendbarkeit der Schichtkörper einschränken oder die Ursache für Beschädigungen der Schichtkörper sind.

Für die Ausbildung einer mechanisch wirkenden Verbindung sind bei der Fertigung des Schichtstoffs bereits relativ hohe Flächenpressungen erforderlich. Demgemäß können z. B. aus derartigem Material hergestellte Dichtungen für Dichtungsaufgaben, bei denen nur niedrige Spannkräfte auf die Dichtungsflächen aufgegeben werden dürfen, nicht verwendet werden. Desweiteren führt das Eingreifen oder Einbringen von Zacken oder Erhebungen der Metallverstärkung in den Graphit oder das Gleiten von Graphitmaterial in Vertiefungen der Metallverstärkung zu partiellen Inhomogenitäten und Schwächungen der Graphitauflage. Bei Dichtungen führt dies zu Inhomogenitäten in der Verteilung der Flächenpressung und damit der Dichtwirkung, bei Anwendungen als Coating gegenüber aggressiven Medien zu einer Verringerung der wirksamen Schichtstärke und bei Anwendungen unter hohen Temperaturen zu ungleichmäßiger Erwärmung bzw. Wärmeabführung und infolgedessen zu Verspannungen und Verwerfungen mit der Folge von partiellen Ablösungen. Ablösungen sind bei diesem Verbindungstyp insbesondere bei der Manipulation von Schichtstoffteilen häufig nicht zu vermeiden. Dies ist besonders bei dünnen und damit biegbaren Schichtstoffen oder bei schmalen Teilen aus solchen Schichtstoffen der Fall. Derartige Vorkommnisse führen häufig zur Unbrauchbarkeit des Teils oder beim Auftreten im laufenden Betrieb zu Betriebsstörungen.

Die Verwendung von die Verbindung zwischen verschiedenen Lagen eines Schichtstoffes herstellenden Klebern hat andere Nachteile. Kleber, der bisher für die Herstellung von Schichtstoffen der bekannten Art, werden in Schichtstärken von mindestens mehreren Mikrometern (µm), typischerweise von mehr als 50 µm aufgetragen. Das bedeutet, dass sich zwischen den verschiedenen Lagen eines Schichtstoffes eine Klebstofflage befindet, deren Masse zusätzlich zur Klebung bestimmte Wirkungen hervorruft, die beachtet werden müssen. Schichtstoffe dieser Art können nur bis höchstens zur Zersetzungstemperatur des Klebstoffs eingesetzt werden. Andernfalls sind die Gebrauchsfähigkeit verhindernde oder herabsetzende Schäden wie Ablösungen einzelner Lagen die Folge. Desweiteren ist das Austreten von Zersetzungsprodukten des Klebers in die Apparaturen oder die Umgebung häufig nicht tolerierbar. Selbst wenn das Schichtstoffteil eingespannt ist und deshalb Ablösungen der Lagen nicht zu befürchten sind, wie dies bei Flachdichtungen der Fall ist, führt die Zersetzung des Klebers wegen der mit der Zersetzung einhergehenden Volumenverminderung zu einer Reduzierung der Dichtwirkung durch Senkung der Schraubenvorspannung. Ein anderer Schädigungsmechanismus setzt bei verklebten Schichtstoffen unter Druckspannung ein, wenn Kleberschichten durch thermische oder chemische Einwirkung erweichen. Die unter Druckspannung stehenden Graphitschichten beginnen dann bereits bei relativ niedrigen Flächenpressungen seitlich abzugleiten, was im Extremfall zum Zerreißen des Schichtstoffs führt. Im Fall einer verklebten Flachdichtung wird z.B. die Dichtwirkung wegen der mit den Gleitvorgängen verbundenen Verringerung der Schraubenvorspannung herabgesetzt. Nachspannen der Schrauben kann diesen Mangel nicht ausgleichen, weil dann die Fließprozesse weitergehen. Schließlich müssen bei Anwendungen wie z. B. bei Filterplatten in Elektrofiltern, bei denen auch eine gute elektrische Leitfähigkeit senkrecht zur Oberfläche des Schichtstoffs gefordert ist, teure Leitkleber verwendet werden. Ablösungen im Klebersystem, die durch chemische Einwirkungen oder durch Schwingungen verursacht werden können, führen hier mindestens zu einer drastischen Verringerung des Wirkungsgrades. Auch bei der Herstellung von Schichtstoffen, die zur Ableitung, Übertragung oder Verteilung von Wärme genutzt werden, ist häufig die Verwendung von teuren, thermisch leitfähigen Klebern notwendig, da die geringe Wärmeleitfähigkeit von herkömmlichen Klebern die Wärmeleitfähigkeit des verklebten Schichtstoffs in senkrechter Richtung zu den Fügeebenen deutlich verringert.

Die Erfindung hat sich die Aufgabe gestellt, einen Schichtstoff, der aus mindestens einer Lage eines kompressiblen, graphitischen Materials und mindestens einer weiteren Lage eines graphitgefüllten Polymer-Materials besteht und bei dem eine unlösbare Verbindung zwischen den Lagen vorliegt, anzugeben. Die Erfindung hat sich weiterhin die Aufgabe gestellt, ein Verfahren zur Herstellung eines solchen Schichtstoffes zu schaffen. Insbesondere soll der Schichtstoff einer sein, der die beschriebenen Nachteile von Schichtstoffen nach dem Stand der Technik nicht hat und bei dem die Verbindung zwischen Lagen sowohl unter thermischen als auch unter mechanischen Beanspruchungen, wie Biegung oder Druckspannungen, unlösbar ist, d. h. dass die Festigkeit der Verbindung über die Erstreckung der Verbindungsflächen des Schichtstoffs größer als die Eigenfestigkeit der einzelnen Lagen ist.

Die Aufgabe wird durch die kennzeichnenden Merkmale des Patentanspruch 1 gelöst. Vorteilhafte Ausgestaltungen sind in den weiteren Ansprüchen dargelegt.

Das zum Verbinden verwendete, kompressible Graphitmaterial wird in an sich bekannter Weise durch thermisches Expandieren von Graphiteinlagerungsverbindungen zu sogenanntem expandierten Graphit und nachfolgendes Verdichten des expandierten Graphits zu flexiblen Folien oder zu Platten hergestellt (US 404,061; DE 26 08 866; US 4,091,083). Diese können auch mit Harzen imprägniert sein. Weiterhin können auch Graphitschäume, Garbonfaser-Filze, Carbonfaser-Gewirke oder Carbonfaser-Gelege eingesetzt werden.

Im weiteren wird für diese Gruppe von Materialien der Begriff "kompressibler Graphit" verwendet.

Die mit dem "kompressiblen Graphit" zu verbindende Schicht ist aus der Gruppe der graphitgefüllten Polymer-Materialien ausgewählt. Im weiteren wird für diese Gruppe von Materialien der Begriff "zweite Schicht" verwendet. Bei der Lösung der Aufgabe wurde nach den haftungsvermittelnden Substanzen zwischen "kompressiblem Graphit" und der "zweiten Schicht" gesucht, die gleichmäßig und extrem dünn auf die Oberflächen der beiden Materialien aufbringbar sind. Hydro- und oleophobierende Substanzen lassen sich in bekannter Weise in sehr dünnen Überzügen auf Oberflächen, speziell auf textile Oberflächen aber wie die Versuche zeigten, auch auf den "kompressiblen Graphit" und die "zweite Schicht" aufbringen. Überraschenderweise wurde nun gefunden, dass diese Substanzen auch als ausgezeichnete Haftvermittler zwischen dem "kompressiblen Graphit" und der "zweiten Schicht" wirken, wenn die zu verbindenden Oberflächen eine gewisse Zeit lang bei erhöhter Temperatur zusammengepresst werden. Diese haftvermittelnde Wirkung wird auch dann noch entfaltet, wenn diese Substanzen in so geringer Menge aufgetragen werden, dass wenigstens eine der zu verbindenden Oberflächen gerade damit bedeckt werden kann.

Es ist wesentlich für die Erfindung, dass die jeweilige haftvermittelnde Substanz in möglichst geringer Menge, d. h. in im Nanometer-Bereich (nm) liegenden Stärken aufgetragen wird. Die verwendeten erfindungsgemäßen Substanzen wirken offensichtlich selektiv haftvermittelnd auf die Materialpaarung "kompressibler Graphit" und "zweite Schicht". Andere Stoffe als "kompressibler Graphit" wie Keramiken, Gummi, Kunststoffe, Holz ließen sich damit nicht fest miteinander oder mit einer "zweiten Schicht" verbinden. Die Haftvermittlung folgt hier also nicht den bei üblichen Klebstoffen bekannten Verbindungsmechanismen. Dies folgt auch aus der Tatsache, dass bei mehreren der hergestellten Schichtstoffe die Verbindungsfestigkeit zwischen "kompressibler Graphit" und "zweiter Schicht" auch oberhalb der Zersetzungstemperatur der Haftvermittler bestehen bleibt. Nachteile der oben beschriebenen Art treten nicht mehr auf. Der Schichtstoff kann bis zur Eigenfestigkeit der Schichten (Lagen) druckbelastet werden.

Die erfindungsgemäß verwendbaren Haftvermittler sind grenzflächenaktive Substanzen aus der Gruppe der siliciumorganischen Verbindungen, vorzugsweise der Silicone, der perfluorierten Verbindungen und der Metallseifen, die an sich wohlbekannt sind und als Hydrophobierungs-, Antischaum- oder Weichgriffmittel in der Technik, z. B. für die Ausrüstung von Textilien verwendet werden (P. Hardt, Silicon-Textilhilfsmittel, Textilveredelung 19 (1984), S. 143 bis 146; Ullmanns Enzyklopädie der technischen Chemie, 3. Auflage 1966, Bd. 17, S. 203 bis 206). Von den Siliconen werden insbesondere Polysiloxane aus der Gruppe Dimethyl-polysiloxane, Methyl-hydrogen-polysiloxane, (Methyl-poly-alkylenoxid)dimethyl-polysiloxane, Amino-modifizierte-methyl-polysiloxane, alpha (α), omega (ω) -Dihydroxy-dimethyl-polysiloxane, α, ω -Divinyl-dimethyl-polysiloxane, α, ω -Dihydroxy- (methyl-alkylamino)-dimethyl-polysiloxane verwendet. Aus der Gruppe der grenzflächenaktiven perfluorierten Verbindungen haben sich besonders Perfluorcarbonsäuren und perfluorierte Verbindungen der allgemeinen Formel F₃C-(CF₂)n-R mit R = Polyurethan, Polyacrylat, Polymethacrylat und n = 6 - 12 als günstig erwiesen. Keiner der genannten Stoffe darf Klebstoffcharakter haben, da sonst die Wirkungsweise der Erfindung nicht mehr gewährleistet wäre und die im Vorstehenden beschriebene Nachteile wieder wirksam werden. Die Wirkung der genannten grenzflächenaktiven Substanzen kann verbessert werden, indem in sie entweder vor ihrem Auftragen auf die Oberflächen des "kompressiblen Graphits" und/oder der "zweiten Schicht" oder nach diesem Vorgang mindestens ein hydrolysierbares Salz aus der Gruppe der Metalle, Aluminium, Zirkon, Titan, Zinn, Zink, Chrom in molekularer Form eingelagert wird. Dies geschieht entweder durch Vermischen der entsprechenden Komponenten miteinander im gewünschten Verhältnis vor dem Auftragen oder nach dem Auftragen der ersten aus einem Siloxan und/oder einer perfluorierten Verbindung und/oder einer Metallseife bestehenden Komponente auf eine oder beide der zu verbindenden Oberflächen auf die bereits aufgetragene Schicht durch ein geeignetes Auftragsverfahren. Um die notwendige feine Verteilung zu erreichen, wird hierbei häufig mit Emulsionen, Dispersionen oder Lösungen gearbeitet. Die aufgetragenen hydrolysierbaren Salze verteilen sich dann in der ersten Schicht durch Diffusion in molekularer Form. Bevorzugt werden als hydrolysierbare Salze Fettsäuresalze der genannten Metalle zugesetzt. Sie wirken außerdem vernetzend auf die grenzflächenaktiven Verbindungen und fördern deren Fixierung auf den Oberflächen, auf die sie aufgebracht wurden. Als Vernetzungshilfe kann vorteilhafterweise auch ein Epoxidamin eingesetzt werden.

Die angegebenen grenzflächenaktiven Substanzen können, unabhängig von der Stoffklasse, der sie angehören, allein oder in Mischungen untereinander angewendet werden, wobei Mischungen aus mehr als zwei der grenzflächenaktiven Substanzen zwar möglich, aber aus praktischen Gründen unüblich sind. Vorteilhaft sind z. B. Mischungen aus Methyl-hydrogen-polysiloxan und (Methylpoly-alkylenoxid)-dimethyl-polysiloxan, Mischungen aus Methyl-hydrogen-polysiloxan und α,

ω -Dihydroxydimethyl-polysiloxan und Mischungen aus aminomodifiziertem Methyl-polysiloxan und α, ω - Dihydroxydimethyl-polysiloxan. Als besonders vorteilhaft hat sich eine Mischung von Methyl-hydrogen-polysiloxan und Dimethyl-polysiloxan im ungefähren Gewichtsverhältnis von 1 : 1 erwiesen, die bevorzugt in Form einer wässrigen Emulsion verarbeitet wird.

Falls es Schwierigkeiten bereitet, die grenzflächenaktive Substanz oder eine Mischung derartiger Substanzen gleichmäßig auf die Oberflächen des "kompressiblen Graphits" und der "zweiten Schicht" aufzubringen, empfiehlt sich der Zusatz eines Benetzungshilfsmittels wie z. B. eines Alkylsulfonats oder einer Aufbereitung aus einem Fettalkohol und einem Etheralkohol zur aufzutragenden Flüssigkeit.

Die "zweite Schicht" kann in Form dünner Folien, Platten oder Blöcken vorliegen und die Oberflächen können plan oder wie in Rohren oder Behältern, gebogen sein. Vor ihrer Verarbeitung zum Schichtstoff müssen die zum Fügen mit dem "kompressiblen Graphit" bestimmten Oberflächen der "zweiten Schicht" gesäubert werden. Weitere Oberflächenbehandlungen sind nicht erforderlich.

Die Komponenten des Schichtstoffs können in allen möglichen Anordnungen kombiniert werden. Die "zweite Schicht", die vorzugsweise in Form von Folien oder flächigen Teilen mit Stärken von zehntel Millimetern bis wenigen Zentimetern vorliegt, kann einseitig oder beidseitig mit "kompressiblem Graphit" beschichtet werden. Es können auch Körper aus einer wechselnden Folge von "kompressiblem Graphit" und der "zweiten Schicht" hergestellt werden.

Das Auftragen der grenzflächenaktiven Substanz kann auf eine oder auf beide der zu verbindenden Oberflächen vorgenommen werden. In aller Regel wird nur eine Oberfläche der Paarung benetzt, da dadurch die Menge an verwendeter grenzflächenaktiver Substanz weiter verringert werden kann.

Beim Auftragen der grenzflächenaktiven Substanzen auf die zu verbindenden Oberflächen muss es stets das Ziel sein, möglichst wenig dieser Substanzen, diese Menge aber möglichst gleichmäßig aufzubringen. Man arbeitet deshalb bei der üblichen Verfahrensweise nur selten mit reinen Substanzen. Diese werden in der Regel nur dann verwendet, wenn sie niedrigviskos genug sind. Üblicherweise werden Lösungen oder Emulsionen bzw. Dispersionen angewandt, wobei beim Arbeiten im größeren Maßstab wässrige Emulsionen bevorzugt werden. Durch Wahl entsprechender Verdünnungsgrade, eventuell in Verbindung mit dem Zusatz geringer Mengen an Benetzungshilfsmitteln, können so z. B. durch Aufstreichen, mit Hilfe von Auftragsrollen, durch Sprühen jeweils in Verbindung mit nachfolgendem Abstreifen oder anderen an sich bekannte Verfahren äußerst dünne Auflagen an grenzflächenwirksamen Substanzen aufgebracht werden. Die Schichtstärke beträgt bei den üblichen Anwendungen nicht mehr als 1000 nm. Sie soll nicht geringer als 10 nm sein. Bevorzugt wird mit Schichtstärken von 100 bis 500 nm gearbeitet. Es ist nicht notwendig, dass zusammenhängende Filme aus grenzflächenaktiven Substanzen erzeugt werden. Eine gleichmäßig verteilte dichte Auflage feinster Tröpfchen erfüllt auch den erfindungsgemäßen Zweck. Ein Abstreifen überschüssiger Flüssigkeit nach dem ersten Auftragevorgang empfiehlt sich aber auch hier.

Die Beschaffenheit der "kompressiblen Graphit"-Lage richtet sich nach dem für den Schichtstoff vorgesehenem Verwendungszweck. Im allgemeinen werden Lagen mit Stärken zwischen 0,1 bis 40 mm, vorzugsweise von 0,2 bis 2 mm verwendet. Die Rohdichte der aufzubringenden "kompressiblen Graphit"-Lage liegt üblicherweise im Bereich von 0,01 bis 1,9 g/cm³, vorzugsweise von 0,5 bis 1,8 g/cm³. Es ist allerdings auch möglich, in einer die "zweite Schicht" umgebenden, passenden Form expandierten Graphit auf die zuvor mit Adhäsionsvermittler versehenen Oberfläche der "zweiten Schicht" aufzugeben (Rohdichte ca. 0,002 g/cm³) und diesen expandierten Graphit dann in dieser Form zu der gewünschten "kompressiblen Graphit"-Lage zu verdichten. Auf diese Weise können sehr dünne "kompressible Graphit"-Lagen aufgebracht werden. Gegebenenfalls kann auf eine so erzeugte "kompressible Graphit"-Lage noch eine weitere "kompressible Graphit"-Lage, z. B. in Folien- oder Plattenform aufgepresst werden, die sich dann fest mit der darunter liegenden Lage verbindet, wenn diese zuvor nicht zu hoch verdichtet wurde.

Die auf die "zweite Schicht" vor dem Verpressen aufgebrachten "kompressiblen Graphit"-Lagen können bereits die Rohdichte haben, die für sie im fertigen Schichtstoff vorgesehen ist. Der beim Zusammenpressen der Lagen aus "kompressiblen Graphit" und der "zweiten Schicht", zur Herstellung des Schichtstoffs aufgewendete Pressdruck darf dann nicht den zum Erzielen der gegebenen Rohdichte der "kompressiblen Graphit"-Lage erforderlichen Verdichtungsdruck übersteigen. Es können aber auch zunächst "kompressible Graphit"-Lagen mit einer niedrigeren Rohdichte als der Endrohdichte im fertig verpressten Schichtstoff aufgebracht werden. Die vorgesehene Endrohdichte wird dann erst beim Zusammenpressen der Komponenten des Schichtstoffs erzeugt.

Nach dem Zusammenfügen der den Schichtstoff bildenden Komponenten wird die angestrebte unlösbare Verbindung zwischen dem "kompressiblen Graphit" und der "zweiten Schicht" durch Zusammenpressen hergestellt. Das Zusammenpressen kann mit Hilfe jeder der bekannten und dafür geeigneten Pressvorrichtungen geschehen. Vorzugsweise werden jedoch Gesenk- oder Etagenpressen, die heizbar sein sollten, verwendet.

Bei der Ausbildung der unlösbaren Verbindung wirken die Verfahrensparameter

Pressdruck, Temperatur und Zeit zusammen. Die gewünschte Verbindungsfestigkeit wird z. B. erreicht, wenn bei vergleichsweise niedrigen Temperaturen von ca. 20 bis 50°C sehr lange Zeit, d. h. in der Größenordnung von Tagen unter Einwirkung vergleichsweise hoher Drücke zusammengepresst wird. Durch eine Erhöhung der Presstemperatur kann die erforderliche Presszeit indessen stark gesenkt werden. Hohe Pressdrücke bewirken ebenfalls eine Verkürzung der Presszeit. Für ein wirtschaftliches Arbeiten werden Anpressdrücke von 0,1 bis 200 MPa, vorzugsweise von 3 bis 10 MPa unter Anwendung von Temperaturen von 20 bis 400°C, vorzugsweise von 120 bis 200°C angewendet. Beim Arbeiten innerhalb des letztgenannten Parameterbereichs werden bei entsprechender Parameteroptimierung, die der Fachmann unschwer anhand der gemachten Angaben durch entsprechende Versuche vornimmt, Presszeiten zwischen 5 Minuten und 5 Stunden, vorzugsweise von einer bis zwei Stunden benötigt. Vorteilhafter Weise kann das Verbinden der Lagen des erfindungsgemäßen Schichtstoffes auch kontinuierlich, beispielsweise mit einer Kaschieranlage oder einer Doppelbandpresse, erfolgen.

Die nach der Druckentlastung und Abkühlung auf Raumtemperatur erhaltenen Schichtstoffe weisen eine unlösbare Verbindung zwischen den jeweils benachbarten Lagen auf. Bei Versuchen, die Lagen von einander zu lösen, z. B. durch Verbiegen oder durch Anwendung des Schältests oder eines Abreißtests, tritt immer ein Reißen innerhalb der Lagen und nicht an der Verbindungszone zwischen den Lagen ein, d. h. die Festigkeit der erfindungsgemäß erzeugten Verbindung zwischen den Lagen des Schichtstoffs ist größer als die innere Festigkeit der einzelnen Lage(n).

Erfindungsgemäße Schichtstoffe sind, mechanische Verletzungen der vergleichsweise weichen Graphitoberflächen ausgenommen, handhabungsstabil. Auch bei dünnen Schichtstoffen dieses Typs treten keine Ablösungen auf, wenn sie gebogen werden. Die äußere Lage der Schichtstoffe kann oberflächenbehandelt werden, z. B. durch galvanisches Aufbringen von Metallen, durch thermische Prozesse oder Imprägnierungen mit Furanharz gemäss DE 32 44 595, ohne dass die Festigkeit der Verbindung der Lagen des Schichtstoffes leidet. Bei der An wendung sind die erfindungsgemäßen Schichtstoffe druckfester und hitzebeständiger als herkömmliche geklebte aus "kompressibler Graphit" und einer "zweiten Schicht" bestehende Verbindungen. Sie sind außerdem stabil gegen Delaminierungen des "kompressiblen Graphit"-Teils. Außerdem wird im Gegensatz zu herkömmlich verklebten Schichtverbunden die elektrische und thermische Leitfähigkeit in senkrechter Richtung zu den Fügeebenen durch die grenzflächenaktiven Substanzen nicht abgesenkt.

Die Erfindung wird im folgenden beispielhaft durch Ausführungsbeispiele erläutert.

### Beispiel 1

Mit Hilfe eines Doppelschneckenextruders wurde ein Compound aus 80 Gew.-% gemahlenem expandierten Graphit (mittlere Partikelgröße ca. 200 µm) und 20 Gew.-% Polypropylen (Schmelzpunkt: 163 °C) hergestellt. Durch Spritzguss wurden daraus Platten mit den Abmessungen 80 x 50 x 3 mm³ gefertigt. Eine Graphitfolie der Dichte 1,0 g/cm³ mit den gleichen Abmessungen wurde gereinigt und einseitig dünn mit einer wässrigen Emulsion perfluorierter Kohlenwasserstoffe (Feststoffgehalt 30 Gew.-%) beschichtet. Nach dem Trocknen der Beschichtung bei 80 °C für 2 Minuten wurde die Graphitfolie mit der beschichteten Seite auf eine spritzgegossene Compoundplatte gelegt. Beide Bauteile wurden in einer Presse für 3 h bei 120 °C unter 3 MPa verpresst. Der Verbund ließ sich nur unter Zerstörung der Graphitfolie lösen.

### Beispiel 2

Mit Hilfe eines Doppelschneckenextruders wurde ein Compound aus 60 Gew.-% gemahlenem synthetischen Graphit (mittlere Partikelgröße ca. 10 µm) und 40 Gew.-% Polyamid 6.6 (Schmelzpunkt: 263 °C) hergestellt und zu Platten mit den Abmessungen 200 x 200 x 5 mm³ gepresst. Eine Graphitfolie der Dichte 1,8 g/cm³ mit den Abmessungen 200 x 200 x 0,5 mm³ wurde gereinigt und einseitig dünn mit einer wässrigen Emulsion perfluorierter Kohlenwasserstoffe (Feststoffgehalt 30 Gew.-%) beschichtet. Nach dem Trocknen der Beschichtung bei 80 °C für 2 Minuten wurde die Graphitfolie mit der beschichteten Seite auf eine gepresste Compoundplatte gelegt. Beide Bauteile wurden in einer Presse für 1 h bei 160 °C unter 3 MPa verpresst. Dadurch erhöhte sich die Dichte der Graphitfolie auf ca. 1,2 g/cm³. Der Verbund ließ sich nur unter Zerstörung der Graphitfolie lösen.

### Vergleichsbeispiel 1

Im Gegensatz zu den Beispielen 1 und 2 wurde versucht, zwei nicht komprimierbare keramische Materialien zu verbinden. Dazu wurden zwei Platten (Abmessungen: 90 x 30 x 3 mm³) aus extrudiertem Graphit (Dichte 1,8 g/cm³) gereinigt und wie in Beispiel 1 beschrieben einseitig dünn mit einer grenzflächenaktiven Substanz beschichtet und getrocknet. Anschließend wurden die Platten mit den beschichteten Seiten auf einander gelegt, in eine Presse eingebaut und bei 180 °C unter 5 MPa für 90 Minuten verpresst. Die Platten hafteten leicht an einander. Der Verbund ließ sich aber mechanisch lösen, wobei die Oberflächen der Platten nicht geschädigt oder zerstört wurden.

## Patentansprüche

1. Schichtstoff, **dadurch gekennzeichnet, dass** er aus mindestens eine Lage eines kompressiblen, graphitischen Materials und mindestens einer weiteren Lage eines graphitgefüllten Polymer-Materials besteht, wobei eine unlösbare Verbindung zwischen den Materialien vorliegt und die Materialien durch eine grenzflächenaktive, haftvermittelnde Substanz aus der Gruppe der siliciumorganische Verbindungen, Metallseifen oder perfluorierten Verbindungen verbunden sind.

2. Schichtstoff nach Anspruch 1, **dadurch gekennzeichnet, dass** das kompressible, graphitische Material aus der Gruppe bestehend aus kompaktierten Graphitexpandat, Graphitschäumen, Carbonfaser-Filzen, Carbonfaser-Gewirken oder Carbonfaser-Gelegen ausgewählt ist.

3. Verfahren zur Herstellung eines Schichtstoffs, **dadurch gekennzeichnet, dass** mindestens eine Lage eines kompressiblen, graphitischen Materials und mindestens einer weiteren Lage eines graphitgefüllten Polymer-Materials verbunden werden, indem mindestens eine der zu verbindenden Oberflächen mit mindestens einer grenzflächenaktiven Substanz aus der Gruppe siliciumorganische Verbindungen, perfluorierte Verbindungen, Metallseifen benetzt wird, die zu verbindenden Flächen miteinander in Kontakt gebracht, bei einer Temperatur von minimal 20 und maximal 400 °C und bei einem Druck von 0,1 und 200 MPa gepresst werden.

4. Verfahren nach Anspruch 3, **dadurch gekennzeichnet, dass** mindestens eine der zu verbindenden Oberflächen mit mindestens einer grenzflächenaktiven Substanz aus der Gruppe siliciumorganische Verbindungen, perfluorierte Verbindungen, Seifen der Metalle Natrium, Kalium, Magnesium, Calcium benetzt wird und in diese grenzflächenaktiven Substanzen vor oder nach dem Benetzen der Oberflächen mit diesen, mindestens ein hydrolysierbares Salz aus der Gruppe der Metalle Aluminium, Zirkon, Titan, Zinn, Zink, Chrom in molekularer Form eingelagert wird, die zu verbindenden Flächen miteinander in Kontakt gebracht und bei einer Temperatur von mindestens 20 und höchstens 400 °C und einem Anpressdruck von 1 bis 200 MPa miteinander verbunden werden.

5. Verfahren nach Anspruch 3, **dadurch gekennzeichnet, dass** als grenzflächenaktive Substanz ein Polysiloxan verwendet wird.

6. Verfahren nach Anspruch 5, **dadurch gekennzeichnet, dass** als grenzflächenaktive Substanz ein Polysiloxan aus der Gruppe Dimethyl-polysiloxan, Methylhydrogenpolysiloxan, (Methyl-polyalkylenoxid)-dimethylpolysiloxan, Aminomodifiziertes Methyl-polysiloxan, α, ω -Dihydroxi-dimethyl-polysiloxan, α, ω - Divinyldimethyl-polysiloxan, α, ω -Dihydroxi-(methyl-alkylamino)-dimethyl-polysiloxan verwendet wird.

7. Verfahren nach Anspruch. 3, **dadurch gekennzeichnet, dass** als grenzflächenaktive Substanz eine Verbindung aus der Gruppe der perfluorierten Kohlenwasserstoffe der allgemeinen Formel CF₃-(CF₂)n-R verwendet wird, wobei R ein Polyurethan, ein Polyacrylat- oder ein Polymethacrylatrest und n eine Zahl zwischen 6 und 12 ist.

8. Verfahren nach Anspruch 3 bis 7, **dadurch gekennzeichnet, dass** Mischungen der genannten grenzflächenaktiven Substanzen verwendet werden.

9. Verfahren nach Anspruch 3 bis 8, **dadurch gekennzeichnet, dass** die grenzflächenaktive Substanz bzw. Zubereitung in Form einer wässerigen Emulsion aufgetragen wird.

10. Verfahren nach Anspruch 9, **dadurch gekennzeichnet, dass** als grenzflächenaktive Substanz eine wässerige Emulsion aus einem Methyl-hydrogen-polysiloxan und einem Dimethyl-polysiloxan verwendet wird.

11. Verfahren nach Anspruch 3 bis 10, **dadurch gekennzeichnet, dass** den grenzflächenaktiven Substanzen Vernetzer aus der Gruppe Fettsäuresalze der Metalle Aluminium, Zirkonium, Titan, Zinn, Zink, Chrom und Epoxidamin zugesetzt werden.

12. Verfahren nach Anspruch 3 bis 11, **dadurch gekennzeichnet, dass** die grenzflächenaktive Substanz mit einer Schichtstärke von 10 bis 1000 nm aufgebracht wird.

13. Verfahren nach Anspruch 12, **dadurch gekennzeichnet, dass** die grenzflächenaktive Substanz mit einer Schichtstärke von 100 bis 500 nm aufgebracht wird.

14. Verfahren nach Anspruch 3 bis 13, **dadurch gekennzeichnet, dass** ein Anpressdruck im Bereich von 1 bis 50 MPa verwendet wird.

15. Verfahren nach Anspruch 14, **dadurch gekennzeichnet, dass** ein Anpressdruck im Bereich von 3 bis 10 MPa verwendet wird.

16. Verfahren nach Anspruch 3 bis 15, **dadurch gekennzeichnet, dass** beim Pressen der Lagen eine Temperatur im Bereich von 80 bis 300 °C verwendet wird.

17. Verfahren nach Anspruch 16, **dadurch gekennzeichnet, dass** beim Pressen der Lagen eine Temperatur im Bereich von 120 bis 200 °C verwendet wird.

18. Verfahren nach Anspruch 3 bis 17, **dadurch gekennzeichnet, dass** zum Zusammenpressen der Lagen eine Presszeit von 5 Minuten bis 5 Stunden verwendet wird.

19. Verfahren nach Anspruch 3 bis 18, **dadurch gekennzeichnet, dass** zum Zusammenpressen der Lagen eine kontinuierliche Pressanlage verwendet wird.

20. Verwendung eines Materials nach Anspruch 1 oder 2 zur Übertragung, Ableitung oder Verteilung von Wärme.

21. Verwendung eines Materials nach Anspruch 1 oder 2 zur Übertragung, Ableitung oder Verteilung von elektrischem Strom.

22. Verwendung eines Materials nach Anspruch 1 oder 2 als Komponente in Brennstoffzellen oder Redox-Flow-Batterien.

## Claims

1. Laminate, **characterized in that** it comprises at least one layer of a compressible, graphitic material and at least one further layer of a graphite-filled polymer material, with there being a permanent bond between the materials and the materials being joined by a surface-active bonding agent selected from the group consisting of silicon-organic compounds, metal soaps and perfluorinated compounds.

2. Laminate according to Claim 1, **characterized in that** the compressible, graphitic material is selected from the group consisting of compacted graphite expandate, graphite foams, carbon fibre felts, carbon fibre knits or carbon fibre lay-ups.

3. Process for producing a laminate, **characterized in that** at least one layer of a compressible, graphitic material and at least one further layer of a graphite-filled polymer material are joined by wetting at least one of the surfaces to be joined with at least one surface-active substance selected from the group consisting of silicon-organic compounds, perfluorinated compounds, metal soaps and bringing the surfaces to be joined into contact with one another and pressing the assembly at a temperature of not less than 20 and not more than 400°C and a pressure of from 0.1 to 200 MPa.

4. Process according to Claim 3, **characterized in that** at least one of the surfaces to be joined is wetted with at least one surface-active substance selected from the group consisting of silicon-organic compounds, perfluorinated compounds, soaps of the metals sodium, potassium, magnesium, calcium and at least one hydrolysable salt of the group of metals aluminium, zirconium, titanium, tin, zinc, chromium in molecular form is incorporated into these surface-active substances before or after wetting of the surfaces with these, the surfaces to be joined are brought into contact with one another and are joined to one another at a temperature of at least 20 and not more than 400°C and a pressing pressure of from 1 to 200 MPa.

5. Process according to Claim 3, **characterized in that** a polysiloxane is used as surface-active substance.

6. Process according to Claim 5, **characterized in that** a polysiloxane selected from the group consisting of dimethylpolysiloxane, methylhydrogenpolysiloxane, (methyl-polyalkylene oxide)dimethylpolysiloxane, amino-modified methyl-polysiloxane, α,ω-dihydoxydimethylpolysiloxane, α,ω-divinyldimethylpolysiloxane, α,ω-dihydroxy-(methyalkylamino) dimethylpolysiloxane is used as surface-active substance.

7. Process according to Claim 3, **characterized in that** a compound selected from the group consisting of perfluorinated hydrocarbons of the general formula CF₃- (CF₂) n-R, where R is a polyurethane, a polyacrylate radical or a polymethacrylate radical and n is from 6 to 12, is used as surface--active substance.

8. Process according to any of Claims 3 to 7, **characterized in that** mixtures of the surface-active substances mentioned are used.

9. Process according to any of Claims 3 to 8, **characterized in that** the surface-active substance or preparation is applied in the form of an aqueous emulsion.

10. Process according to Claim 9, **characterized in that** an aqueous emulsion of a methylhydrogenpolysiloxane and a dimethylpolysiloxane is used as surface-active substance.

11. Process according to any of Claims 3 to 10, **characterized in that** crosslinkers selected from the group consisting of fatty acid salts of the metals aluminium, zirconium, titanium, tin, zinc, chromium and epoxide amine are added to the surface-active substances.

12. Process according to any of Claims 3 to 11, **characterized in that** the surface-active substance is applied in a layer thickness of from 10 to 1000 nm.

13. Process according to Claim 12, **characterized in that** the surface-active substance is applied in a layer thickness of from 100 to 500 nm.

14. Process according to any of Claims 3 to 13, **characterized in that** a pressing pressure in the range from 1 to 50 MPa is used.

15. Process according to Claim 14, **characterized in that** a pressing pressure in the range from 3 to 10 MPa is used.

16. Process according to any of Claims 3 to 15, **characterized in that** a temperature in the range from 80 to 300°C is used during pressing of the layers.

17. Process according to Claim 16, **characterized in that** a temperature in the range from 120 to 200 °C is used during pressing of the layers.

18. Process according to any of Claims 3 to 17, **characterized in that** a pressing time of from 5 minutes to 5 hours is used for pressing together the layers.

19. Process according to any of Claims 3 to 18, **characterized in that** a continuous pressing plant is used for pressing together the layers.

20. Use of a material according to Claim 1 or 2 for the transmission, removal or distribution of heat.

21. Use of a material according to Claim 1 or 2 for the transmission, removal or distribution of electric current.

22. Use of a material according to Claim 1 or 2 as a component in fuel cells or redox flow batteries.

## Revendications

1. Matériau stratifié, **caractérisé en ce qu'**il est constitué par au moins une couche d'un matériau compressible, graphitique et au moins une autre couche d'un matériau polymère chargé de graphite, un assemblage indissociable existant entre les matériaux et les matériaux étant assemblés par une substance tensioactive, promotrice d'adhérence du groupe des composés organosiliciés, des savons métalliques ou des composés perfluorés.

2. Matériau stratifié selon la revendication 1, **caractérisé en ce que** le matériau compressible, graphitique est choisi dans le groupe constitué par le graphite expansé compacté, les mousses de graphite, les feutres en fibres de carbone, les tricots en fibres de carbone ou les non-tissés en fibres de carbone.

3. Procédé pour la préparation d'un matériau stratifié, **caractérisé en ce qu'**au moins une couche d'un matériau compressible, graphitique et au moins une autre couche d'un matériau polymère chargé de graphite sont assemblées **en ce qu'**au moins une des surfaces à assembler est mouillée par au moins une substance tensioactive du groupe des composés organosiliciés, des composés perfluorés, des savons métalliques, les surfaces à assembler sont mises en contact l'une avec l'autre et pressées à une température d'au minimum 20 et d'au maximum 400°C à une pression de 0,1 à 200 MPa.

4. Procédé selon la revendication 3, **caractérisé en ce qu'**au moins une des surfaces à assembler est mouillée par au moins une substance tensioactive du groupe des composés organosiliciés, des composés perfluorés, des savons des métaux sodium, potassium, magnésium, calcium et au moins un sel hydrolysable du groupe des métaux aluminium, zirconium, titane, étain, zinc, chrome est incorporé sous forme moléculaire dans ces substances tensioactives, avant ou après le mouillage des surfaces par celles-ci, les surfaces à assembler sont mises en contact les unes avec les autres et assemblées à une température d'au moins 20 et d'au plus 400°C et à une pression de compression de 1 à 200 MPa.

5. Procédé selon la revendication 3, **caractérisé en ce qu'**on utilise, comme substance tensioactive, un polysiloxane.

6. Procédé selon la revendication 5, **caractérisé en ce qu'**on utilise comme substance tensioactive un polysiloxane du groupe formé par le diméthylpolysiloxane, le méthylhydrogénopolysiloxane, le (méthylpoly(oxyde d'alkylène)-diméthylpolysiloxane, le méthylpolysiloxane modifié par amino, l'α,ω-dihydroxydiméthylpolysiloxane, l'α,ω-divinyldiméthylpolysiloxane, l'α,ω-dihydroxy-(méthylalkylamino)-diméthylpolysiloxane.

7. Procédé selon la revendication 3, **caractérisé en ce qu'**on utilise comme substance tensioactive un composé du groupe formé par les hydrocarbures perfluorés de formule générale CF₃-(CF₂)n-R, où R représente un polyuréthane, un radical polyacrylate ou polyméthacrylate et n vaut un nombre entre 6 et 12.

8. Procédé selon la revendication 3 à 7, **caractérisé en ce qu'**on utilise des mélanges des substances tensioactives mentionnées.

9. Procédé selon la revendication 3 à 8, **caractérisé en ce que** la substance ou, selon le cas, la composition tensioactive est appliquée sous forme d'une émulsion aqueuse.

10. Procédé selon la revendication 9, **caractérisé en ce qu'**on utilise, comme substance tensioactive, une émulsion aqueuse d'un méthylhydrogénopolysiloxane et d'un diméthylpolysiloxane.

11. Procédé selon la revendication 3 à 10, **caractérisé en ce que** les substances tensioactives sont additionnées d'un réticulant du groupe des sels d'acides gras des métaux aluminium, zirconium, titane, étain, zinc, chrome et époxyde-amine.

12. Procédé selon la revendication 3 à 11, **caractérisé en ce que** la substance tensioactive est appliquée en une épaisseur de couche de 10 à 1000 nm.

13. Procédé selon la revendication 12, **caractérisé en ce que** la substance tensioactive est appliquée en une épaisseur de couche de 100 à 500 nm.

14. Procédé selon la revendication 3 à 13, **caractérisé en ce qu'**on utilise une pression de compression dans la plage de 1 à 50 MPa.

15. Procédé selon la revendication 14, **caractérisé en ce qu'**on utilise une pression de compression dans la plage de 3 à 10 MPa.

16. Procédé selon la revendication 3 à 15, **caractérisé en ce qu'**on utilise lors de la compression des couches une température dans la plage de 80 à 300°C.

17. Procédé selon la revendication 16, **caractérisé en ce qu'**on utilise lors de la compression des couches une température dans la plage de 120 à 200°C.

18. Procédé selon la revendication 3 à 17, **caractérisé en ce qu'**on utilise, pour la compression des couches, un temps de pressage de 5 minutes à 5 heures.

19. Procédé selon la revendication 3 à 18, **caractérisé en ce que**, pour la compression des couches, on utilise une installation de pressage continue.

20. Utilisation d'un matériau selon la revendication 1 ou 2 pour le transfert, la déviation ou la répartition de chaleur.

21. Utilisation d'un matériau selon la revendication 1 ou 2 pour le transfert, la déviation ou la répartition de courant électrique.

22. Utilisation d'un matériau selon la revendication 1 ou 2 comme composant dans les piles à combustible ou les batteries à circulation d'oxydoréducteux.
